# EUROPEAN PATENT APPLICATION

(11) **EP 3 968 260 A1**
(43) Date of publication of application: **16.03.2022**
(21) Application number: 20801438.1
(22) Date of filing: 31.03.2020
(51) Int. Cl.: G06Q 40/02

(54) **BORROWER RELIABILITY DETERMINATION PROGRAM AND SYSTEM**

(30) Priority: 06.05.2019 JP 2019087243
(71) Applicant: Assest Corporation, Kashiwa-shi, Chiba, 277-0871 (JP)
(72) Inventor: SAWADA Ayako, Kashiwa-shi, Chiba 277-0871 (JP)
(74) Representative: Rings, Rolf
(86) International application number: PCT/JP2020/014851
(87) International publication number: WO 2020/226003

(57) **Abstract**

A borrower creditworthiness determination program for determining creditworthiness of a borrower company causes a computer to execute: an information acquisition step of acquiring latest account settlement information of a borrower company for which creditworthiness is to be newly determined; and a determination step of using a degree of association between reference account settlement information including past account settlement reports acquired in advance and creditworthiness determined based on the past account settlement reports, the degree of association being represented in three or more levels, so as to determine the creditworthiness of the borrower company based on the degree of association between the reference account settlement information corresponding to the account settlement information acquired at the information acquisition step and the creditworthiness, the degree of association being represented in three or more levels.

## Description

### [Technical Field]

The present invention relates to a program and a system for determining creditworthiness of a borrower, suitable for highly accurately determining the creditworthiness of the borrower company to determine whether or not to make a loan.

### [Background Art]

When a financial institution makes a loan to a start-up, a bank employee determines the creditworthiness of the borrower company. This determination of creditworthiness is made after considering various information such as the past financial statements and business records of the borrower. However, for example, for a large number of borrower companies for which the determination is to be made, the determination work may be delayed, which also needs to reduce the labor burden of the determination work. On the other hand, such a determination for loan requires high determination accuracy because it may be a matter of life and death for one company whether or not to obtain a loan. There are no conventional systems that automatically and highly accurately make such a determination for loan.

### [Summary of Invention]

### [Technical Problem]

Therefore, the present invention has been devised in view of the above-mentioned problems, and an object of the present invention is to provide a program and a system for determining creditworthiness of a borrower, which are capable of automatically and highly accurately determining the creditworthiness of the borrower company for which a financial institution determines whether or not to make a loan.

### [Solution to Problem]

In order to solve the above-mentioned problems, a borrower creditworthiness determination program according to the present invention is for determining creditworthiness of a borrower company. The borrower creditworthiness determination program causes a computer to execute: an information acquisition step of acquiring latest account settlement information of a borrower company for which creditworthiness is to be newly determined and market potential information about a potential of a market in which the borrower company for which creditworthiness is to be newly determined develops business; and a determination step of using a degree of association between a combination of reference account settlement information including past account settlement reports acquired in advance and reference market potential information about a potential of the market in which the company for which the reference account settlement information has been acquired has developed business and creditworthiness determined based on the past account settlement reports, the degree of association being represented in three or more levels, so as to determine the creditworthiness of the borrower company based on the degree of association between the combination of the reference account settlement information corresponding to the account settlement information acquired at the information acquisition step and the reference market potential information corresponding to the market potential information acquired at the information acquisition step and the creditworthiness, the degree of association being represented in three or more levels.

### [Advantageous Effects of Invention]

It is possible to automatically and highly accurately determine the creditworthiness of a borrower company even without requiring special skills or experiences to determine whether or not a financial institution makes a loan to the borrower.

### [Brief Description of Drawings]

[Fig. 1]

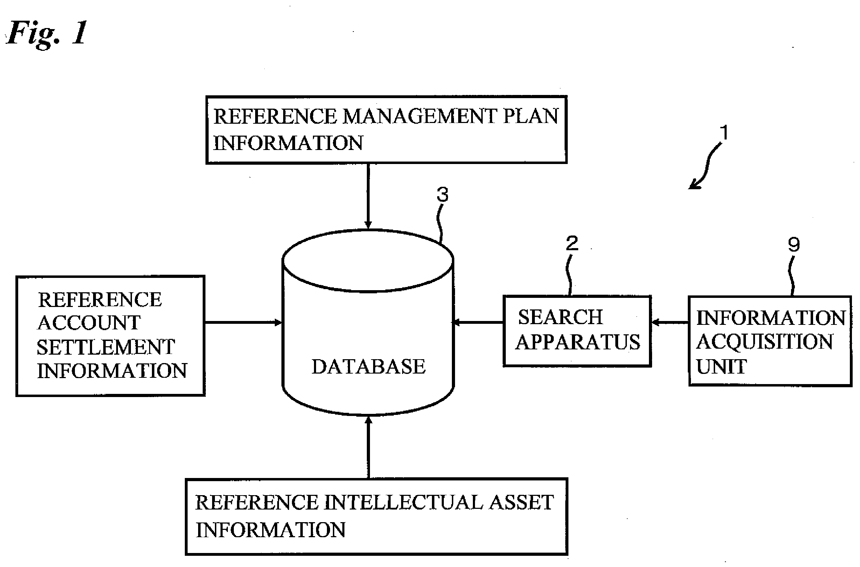

   Fig. 1 is a block diagram illustrating the whole configuration of a system to which the present invention is applied.
[Fig. 2]

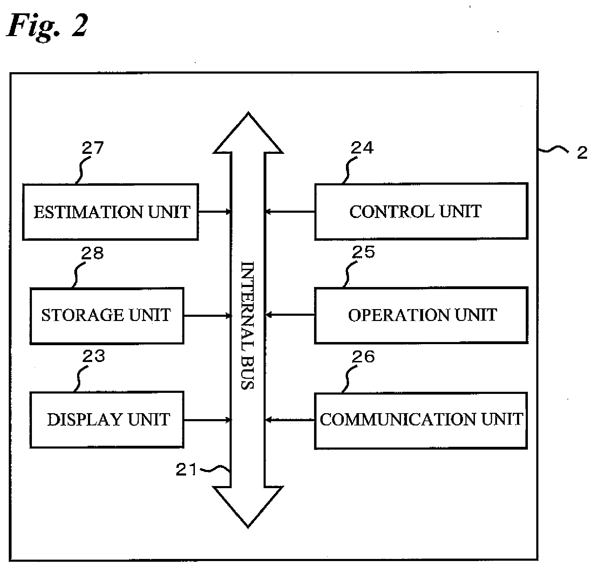

   Fig. 2 is a diagram illustrating a specific configuration example of a search apparatus.
[Fig. 3]

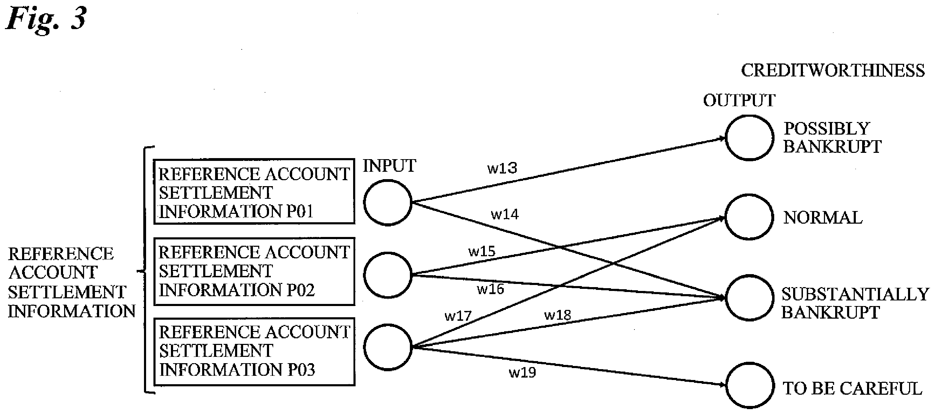

   Fig. 3 illustrates an example of degrees of association between reference account settlement information and creditworthiness represented in three or more levels.
[Fig. 4]

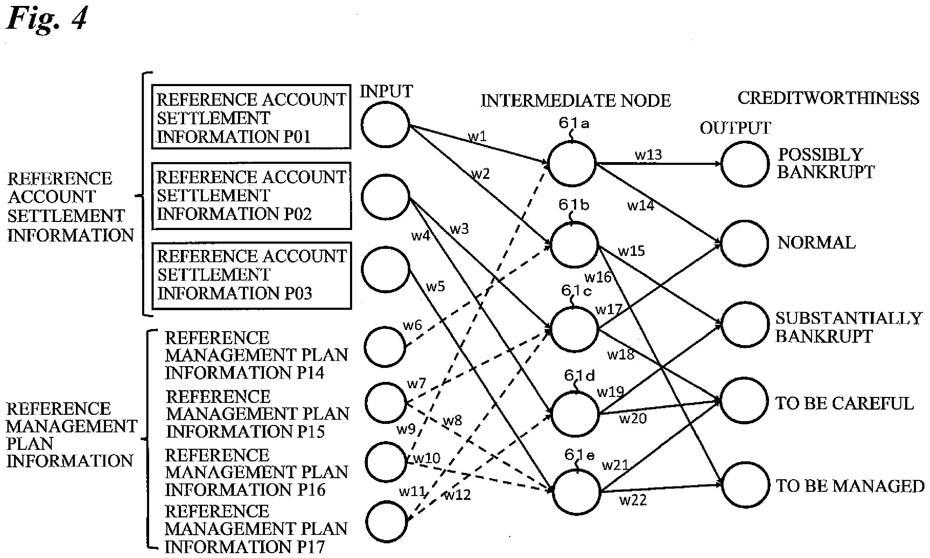

   Fig. 4 illustrates an example in which degrees of association for combinations of the reference account settlement information and reference management plan information are made.
[Fig. 5]

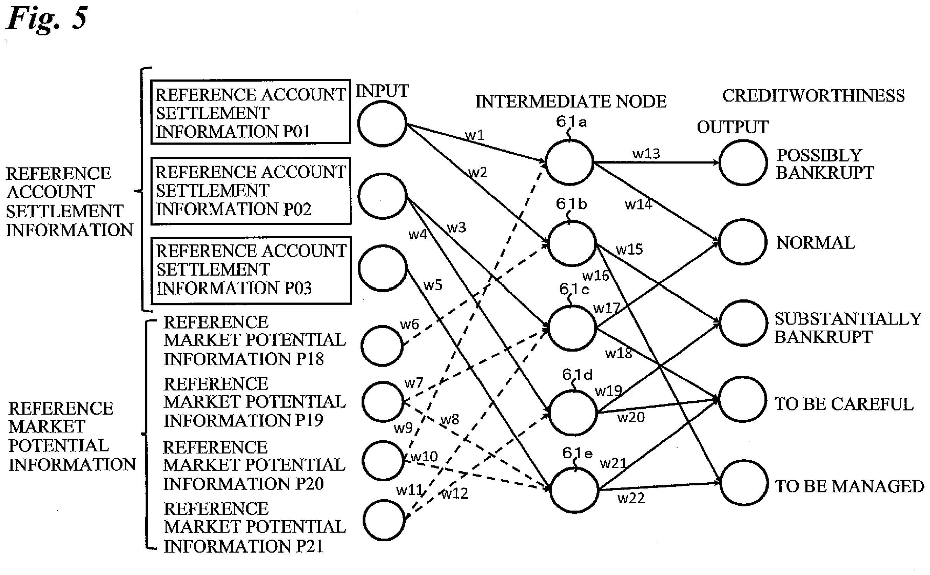

   Fig. 5 illustrates an example in which degrees of association for combinations of the reference account settlement information and reference market potential information are made.
[Fig. 6]

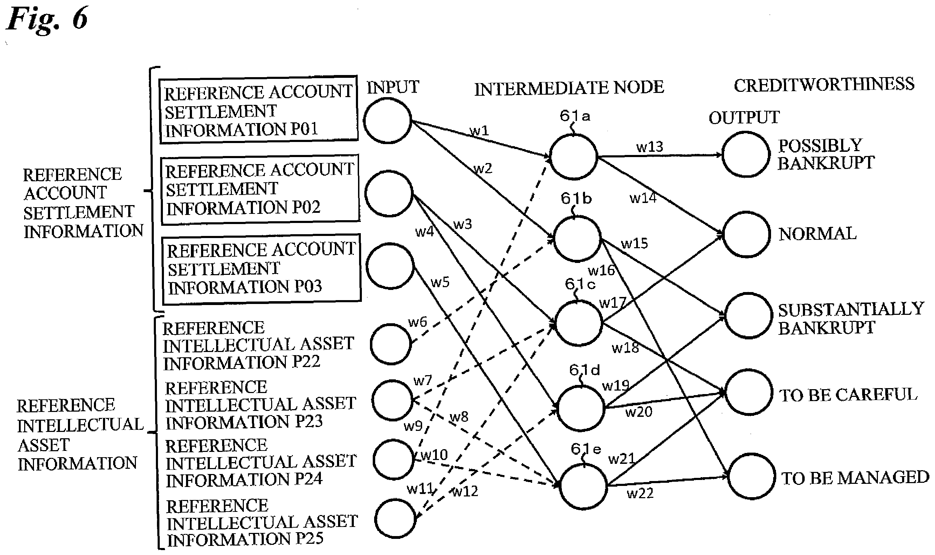

   Fig. 6 illustrates an example in which degrees of association for combinations of the reference account settlement information and reference intellectual asset information are made.
[Fig. 7]

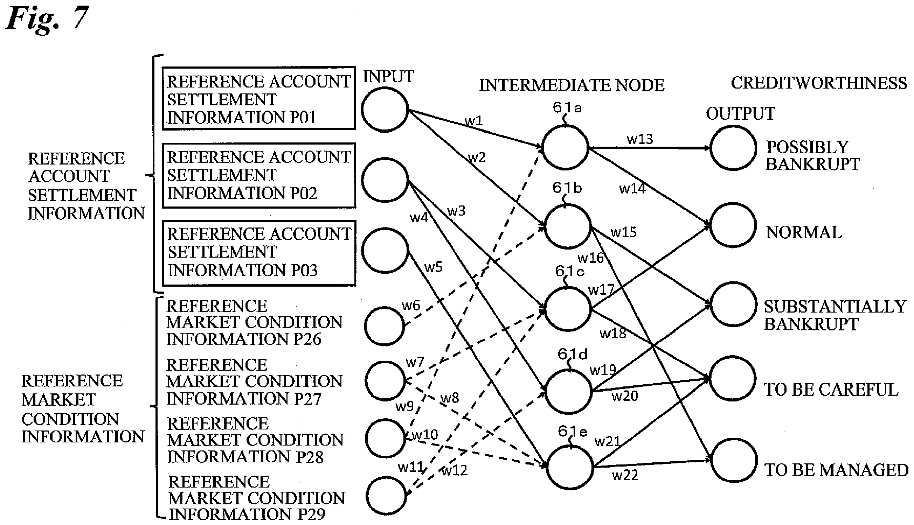

   Fig. 7 illustrates an example in which degrees of association for combinations of the reference account settlement information and reference market condition information are made.
[Fig. 8]

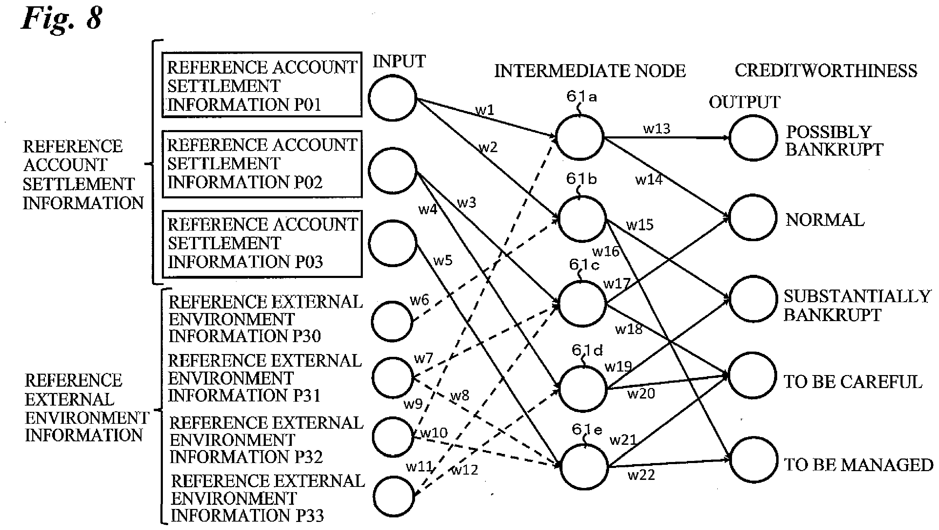

   Fig. 8 illustrates an example in which degrees of association for combinations of the reference account settlement information and reference external environment information are made.
[Fig. 9]

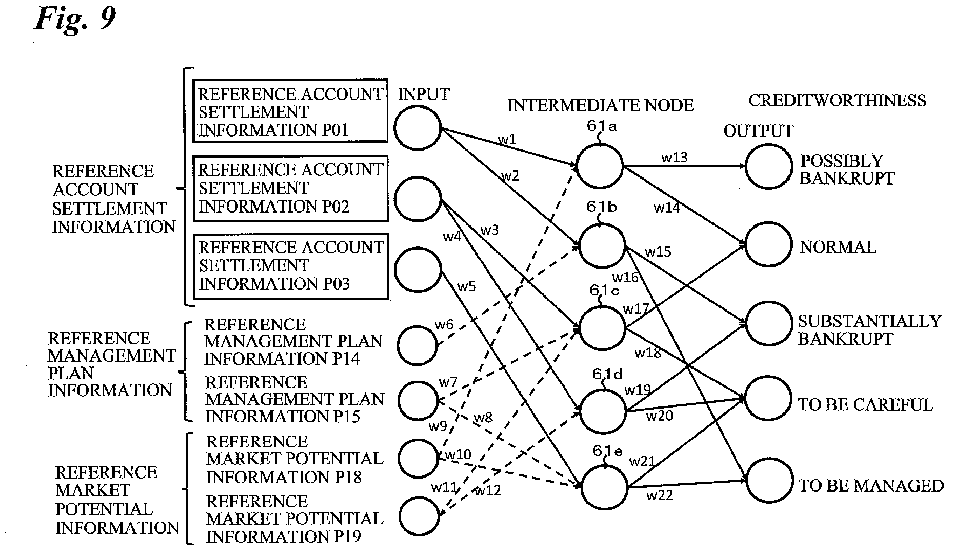

   Fig. 9 illustrates an example in which degrees of association for combinations of three types of reference information are made.
[Fig. 10]

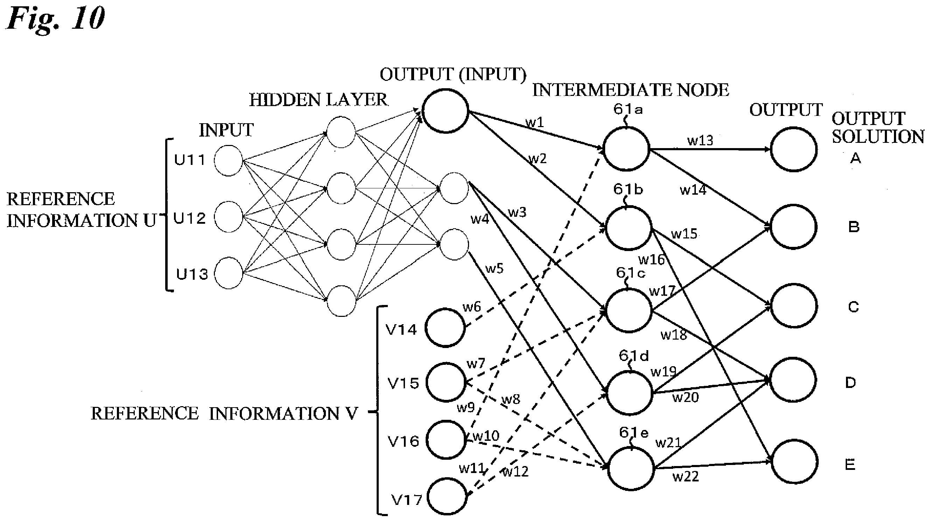

   Fig. 10 is a diagram for explaining another form of degrees of association.

### [Description of Embodiments]

Hereinafter, a borrower creditworthiness determination program to which the present invention is applied will be described in detail with reference to the drawings.

Fig. 1 is a block diagram illustrating the whole configuration of a borrower credit determination system 1 in which the borrower credit determination program to which the present invention is applied is implemented. The borrower creditworthiness determination system 1 includes an information acquisition unit 9, a search apparatus 2 connected to the information acquisition unit 9, and a database 3 connected to the search apparatus 2.

The information acquisition unit 9 is a device for a person who uses this system to input various commands and information, and specifically, includes a keyboard, buttons, a touch panel, a mouse, switches, and the like. The information acquisition unit 9 is not limited to a device for inputting text information, and may include a device such as a microphone that can detect voice and convert it into text information. Further, the information acquisition unit 9 may be configured as an image capturing device capable of capturing an image, such as a camera. The information acquisition unit 9 may include a scanner having a function of recognizing a character string from a paper-based document. Further, the information acquisition unit 9 may be integrated with the search apparatus 2 described later. The information acquisition unit 9 outputs the detected information to the search apparatus 2. The information acquisition unit 9 may also include means for retrieving position information by scanning map information. The information acquisition unit 9 also includes a temperature sensor, a humidity sensor, a flow rate sensor, and other sensors capable of identifying substances and physical properties. The information acquisition unit 9 may include means for automatically fetching character strings and data posted on an internet site.

The database 3 stores various information necessary for determining the creditworthiness of a borrower. Stored as the information necessary for determining the creditworthiness of a stock borrower are data sets of reference account settlement information including the past account settlement reports, reference management plan information about a management plan acquired from a company, reference intellectual asset information about intellectual assets owned by the company, reference market condition information about the market condition at a certain point in the past, and reference external environment information about the external environment in a certain period of time in the past, and their associated creditworthiness determined in the past.

In other words, in addition to such reference account settlement information, any one or more of the reference management plan information, the reference intellectual asset information, the reference market condition information, and the reference external environment information are associated with the creditworthiness determined in the past, and these are stored with this association in the database 3.

The search apparatus 2 includes, for example, an electronic device such as a personal computer (PC), but may be embodied as any other electronic device such as a mobile phone, a smartphone, a tablet terminal, and a wearable terminal, instead of the PC. The search device 2 allows a user to obtain a search solution.

Fig. 2 illustrates a specific configuration example of the search apparatus 2. The search apparatus 2 includes a control unit 24 for controlling the entire search apparatus 2, an operation unit 25 for inputting various control instructions via operation buttons, a keyboard, or the like, a communication unit 26 for performing wired communication or wireless communication, an estimation unit 27 for making various assessments, and a storage unit 28 for storing a program for performing a search to be executed, typified by a hard disk or the like, which are all connected to an internal bus 21. In addition, a display unit 23, which serves as a monitor that actually displays information, is connected to the internal bus 21.

The control unit 24 is a so-called central control unit for controlling each component mounted in the search apparatus 2 by transmitting a control signal to the component via the internal bus 21. Further, the control unit 24 transmits various control instructions via the internal bus 21 in response to operations through the operation unit 25.

The operation unit 25 is embodied by a keyboard or a touch panel, and an execution instruction for executing a program is input from the user. When the execution instruction is input by the user, this operation unit 25 notifies the control unit 24 of the execution instruction. In response to receiving this notification, the control unit 24 executes a desired processing operation in cooperation with the components including the estimation unit 27. This operation unit 25 may be embodied as the information acquisition unit 9 described above.

The estimation unit 27 estimates a search solution. In executing an estimation operation, the estimation unit 27 reads out various information stored in the storage unit 28 and various information stored in the database 3 as necessary information. This estimation unit 27 may be controlled by artificial intelligence. This artificial intelligence may be based on any well-known artificial intelligence technique.

The display unit 23 includes a graphic controller that creates a display image based on the control by the control unit 24. The display unit 23 is realized by, for example, a liquid crystal display (LCD) or the like.

In the case where the storage unit 28 is composed of a hard disk, predetermined information is written to a corresponding address in the storage unit 28, and is read out from the storage unit 28 as needed, based on the control by the control unit 24. Further, the storage unit 28 stores a program for executing the present invention. This program is read and executed by the control unit 24.

The operation of the borrower creditworthiness determination system 1 having the above-described configuration will be described.

In the borrower creditworthiness determination system 1, for example, it is assumed that three or more levels of degrees of association between the reference account settlement information and the creditworthiness are set in advance and acquired as illustrated in Fig. 3. The reference account settlement information reflects the account settlement reports of companies that have been examined in the past. In other words, on the basis of the current time point at which the creditworthiness of a borrower is to be determined, the reference account settlement information reflects the past settlement reports of the companies that have been examined before. Examples of this reference account settlement information include all data related to account settlement of the companies that provided the account settlement reports, including financial statements, for example, typically, the numerical values of the book information and financial information described in the financial statements, such as current ratio, current liability, equity capital ratio, shareholders' equity, total capital, gearing ratio, interest-bearing liabilities, equity capital, recurring profit margin, recurring profit, sales, return on assets, recurring profit, total capital, net profit, recurring profit growth rate, net recurring profit, previous recurring profit, sales, repayment ability, years of debt redemption, interest-bearing liabilities, operating funds, cash flow, operating profit, and depreciation expenses. In addition to such numerical values in the financial statements, the reference account settlement information may include information as to whether or not it is insolvent, how much borrowing from officers, inventory assets (inventories), etc. it has, and the like. These pieces of reference account settlement information may be for one year or several years.

The creditworthiness may be ranked as "normal", "to be careful", "possibly bankrupt", "substantially bankrupt", "bankrupt", etc., or displayed as a percentage, with 100% indicating the highest creditworthiness and 0% indicating the lowest creditworthiness. This creditworthiness is pre-collected as a data set with the reference account settlement information. This creditworthiness may be used as it is, for example, if there are any records of determination made previously by a financial institution. Further, the creditworthiness may be calculated based on the number of cases where a loan was approved and the number of cases where a loan was not obtained, with the same or similar reference account settlement information. Incidentally, this creditworthiness is given to the company that provided the reference account settlement information. Accordingly, in the past examination, such data sets can be obtained by acquiring the companies that provided the reference account settlement information and the creditworthiness given to the companies. A large number of such cases are collected in advance. For the account settlement information, since there is not exactly the same account settlement information between companies, the account settlement information itself may be categorized. Specifically, reference account settlement information P01 to P03 in Fig. 3 may be account settlement information classified by type, and may be classified by separation based on the profit margin, the amount of profit, or the like, for example. Further, it may be categorized by a pattern (e.g., a large amount of accounts receivable, a large amount of entertainment expenses, and no inventory because of the service industry).

Thus, through data sets of such reference account settlement information and the creditworthiness, it can be seen how the data related to various account settlements generated in the reference account settlement information was determined in the loan examination. Thus, the account settlement data described in the reference account settlement information and the creditworthiness are a data set. Accordingly, collecting data sets of the reference account settlement information and the creditworthiness makes it possible to know how the creditworthiness has been determined in the examination after what kind of settlement reports was made in the past.

In the example of Fig. 3, it is assumed that the input data is, for example, the reference account settlement information P01 to P03. Such pieces of reference account settlement information as the input data are linked to the outputs. For each output, creditworthiness as an output solution is represented.

The pieces of reference account settlement information are associated with creditworthiness serving as their output solutions through three or more levels of degrees of association. The reference account settlement information is arranged on the left side with respect to the degrees of association, and each creditworthiness is arranged on the right side with respect to the degrees of association. The degree of association indicates which of the creditworthiness has high association with the reference account settlement information arranged on the left side. In other words, this degree of association is an index indicating what creditworthiness is likely to be associated with each piece of reference account settlement information, and also indicates the accuracy in selecting the most probable creditworthiness from the reference account settlement information. In the example of Fig. 3, w13 to w19 are illustrated as the degrees of association. These w13 to w19 are represented in 10 levels as listed in Table 1 below, in which the closer to 10 points, the higher the degree of association between the corresponding combination as an intermediate node and the corresponding creditworthiness as an output; on the contrary, the closer to 1 point, the lower the degree of association between the corresponding combination as an intermediate node and the corresponding creditworthiness as an output.

**[Table 1]**

| Symbol | Degree of association |
|---|---|
| w13 | 7 |
| w14 | 2 |
| w15 | 9 |
| w16 | 5 |
| w17 | 2 |
| w18 | 1 |
| w19 | 8 |
| w20 | 6 |
| w21 | 10 |
| w22 | 3 |

The search apparatus 2 acquires in advance such degrees of association w13 to w19 in three or more levels illustrated in Fig. 3. Specifically, in assessing the actual search solution, the search apparatus 2 accumulates the past data on the reference account settlement information, and which of the creditworthiness was used for that information, analyzes and examines them, and thus makes the degrees of association illustrated in Fig. 3 in advance.

For example, it is assumed that certain reference account settlement information has been determined to be "possibly bankrupt". It is assumed that. In such a situation, it is assumed that many pieces of reference account settlement information having a similar pattern are also determined to be "possibly bankrupt". In this case, the degree of association for "possibly bankrupt" becomes strong. On the other hand, it is assumed that, among pieces of reference account settlement information having exactly the same pattern (classification), many of them are determined to be "substantially bankrupt" while a few of them are determined to be "possibly bankrupt". In such a case, the degree of association for "substantially bankrupt" becomes strong, and the degree of association for "possibly bankrupt" becomes low.

The analyzing and examining may be performed by artificial intelligence. In such a case, for example, for the reference account settlement information P01, analysis is performed from the past result data of determination on the creditworthiness. This may be extracted from, for example, the past result data of determination on the creditworthiness in the past loan examination, stored in the financial institution. For the reference account settlement information P01, if there are many cases of "possibly bankrupt", the degree of association that leads to this "possibly bankrupt" is set higher, and if there are many cases of "substantially bankrupt", the degree of association that leads to this "substantially bankrupt" is set higher. For example, for the example of the reference account settlement information P01, it is linked to "possibly bankrupt" and "substantially bankrupt", and from the previous cases, the degree of association of w13, which leads to "possibly bankrupt", is set to 7 points, and the degree of association of w14, which leads to "substantially bankrupt", is set to 2 points.

Further, the degrees of association illustrated in Fig. 3 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

Such degrees of association are what is called learned data in artificial intelligence. After such learned data is created, when a new determination is actually made on creditworthiness from now on, the creditworthiness will be predicted by using the above learned data. In such a case, the latest account settlement information of the borrower company for which the creditworthiness is to be actually newly determined is acquired. This reference account settlement information may be for the last year or several years. This account settlement information is composed of the same type of data as the above-mentioned reference account settlement information.

The acquired new account settlement information is input by the information acquisition unit 9 described above. The information acquisition unit 9 may be configured to acquire such account settlement information as electronic data.

Based on the new account settlement information acquired in this way, for that account settlement information, the creditworthiness that is likely to be determined is actually searched for. In such a case, the degrees of association illustrated in Fig. 3 (Table 1) acquired in advance is referred to. For example, if the acquired new account settlement information is the same as or similar to P02, it is associated with "normal" by the degree of association w15 and with "substantially bankrupt" by the degree of association w16. In such a case, "normal" with the highest degree of association is selected as the optimum solution. However, it is not essential to select the one with the highest degree of association as the optimum solution, and "substantially bankrupt", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

In this way, it is possible to search for the creditworthiness to be determined from the acquired new account settlement information and display the resulting creditworthiness to the user (consultant, bank employee, customer). The user, who sees the search result, can grasp the degree of credit of a borrower candidate based on the retrieved creditworthiness. Incidentally, in a process of outputting this creditworthiness, instead of or in addition to simply displaying the retrieved creditworthiness, an advice may be provided including display of a specific amount of loan to be provided based on this creditworthiness.

In the example of Fig. 4, it is assumed that, as input data, reference account settlement information P01 to P03 and reference management plan information P14 to 17 are used, for example. As such input data, intermediate nodes illustrated in Fig. 4 are combinations of the reference management plan information and the reference account settlement information. Each intermediate node is further linked to outputs. For each output, each creditworthiness as an output solution is represented.

In the example of Fig. 4, it is assumed that combinations of the reference account settlement information and the reference management plan information have been made. The reference management plan information relates to the details of a management plan. Examples of the details of the management plan include information described in general management plans, such as vision, action guidelines, management policy, goals, analysis of opportunities, threats, and strengths (internal/external environment analysis), gap analysis with goals, medium-term management plan (necessity and formulation procedure), single-year management plan, and sales target. As the reference management plan information, the information obtained from the companies that has previously been examined may be used. From the companies that have been examined, the reference account settlement information, the reference management plan information, and the results of determination on creditworthiness for these pieces of information will be obtained. For the reference management plan information, since there is not exactly the same management plan between companies, the management plan itself may be categorized. Specifically, the reference management plan information P14 to P17 in Fig. 4 may be information classified by type, and may be classified by separation based on the sales target, the management policy, or the like, for example. Further, it may be categorized by a pattern (e.g., a pattern of a single-year management plan or a pattern of a vision), for example.

In the example of Fig. 4, it is assumed that, as input data, the reference account settlement information P01 to P03 and the reference management plan information P14 to 17 are used, for example. As such input data, intermediate nodes illustrated in Fig. 4 are combinations of the reference management plan information and the reference account settlement information. Each intermediate node is further linked to outputs. For each output, creditworthiness as an output solution is represented.

The combinations (intermediate node) of the reference account settlement information and the reference management plan information are associated with each other through three or more levels of degrees of association for creditworthiness, as the output solutions. The reference account settlement information and the reference management plan information are arranged on the left side with respect to the degrees of association, and each creditworthiness is arranged on the right side with respect to the degrees of association. The degree of association indicates which of the creditworthiness has high association with the reference account settlement information and the reference management plan information, which are arranged on the left side. In other words, this degree of association is an index indicating what creditworthiness is likely to be associated with each piece of reference account settlement information and reference management plan information, and also indicates the accuracy in selecting the most probable creditworthiness from the reference account settlement information and the reference management plan information. It is possible to make a determination depending on the actual management plan and also the success probability of the subsequent business, in addition to the account settlement information, and the possibility of collecting funds will also be different. Therefore, the optimum creditworthiness will be searched for based on the combinations of the reference account settlement information and the reference management plan information.

In the example of Fig. 4, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 4. Specifically, in assessing the actual search solution, the search apparatus 2 accumulates the past data on the reference account settlement information and the reference management plan information, and which of the creditworthiness was suitable for these pieces of information, analyzes and examines them, and thus makes the degrees of association illustrated in Fig. 4 in advance.

The analyzing and examining may be performed by artificial intelligence. In such a case, for example, for the reference account settlement information P01 and the reference management plan information P16, analysis is performed on the creditworthiness from the past data. If there are many cases of creditworthiness "possibly bankrupt", the degree of association that leads to this "possibly bankrupt" is set higher, and if there are many cases of "normal" and there are a few cases of "possibly bankrupt", the degree of association that leads to "normal" is set higher and the degree of association that leads to "possibly bankrupt" is set lower. For example, in an example of intermediate node 61a, it is linked to the outputs of "possibly bankrupt" and "normal", and specifically, based on the previous cases, the degree of association of w13 that leads to "possibly bankrupt" is set to 7 points; the degree of association of w14 that leads to "normal" is set to 2 points.

Further, the degrees of association illustrated in Fig. 4 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 4, a node 61b is a node in which the reference management plan information P14 is combined with the reference account settlement information P01 and for which the degree of association for "substantially bankrupt" is w15 and the degree of association for "to be managed" is w16. A node 61c is a node in which the reference management plan information P15 and P17 are combined with the reference account settlement information P02 and for which the degree of association for the creditworthiness is w17 and the degree of association for the creditworthiness is w18.

Such degrees of association are what is called learned data in artificial intelligence. After such learned data is created, when a search for determining the creditworthiness is actually performed from now on, the above learned data will be used. In such a case, in addition to the account settlement information, management plan information is acquired from the company for which the creditworthiness is to be newly determined. This management plan information corresponds to the above-mentioned reference management plan information, and data on gap analysis with the goals of the company as the determination target, a medium-term management plan, and the like may be fetched or directly received as an input.

Based on the new account settlement information and management plan information acquired in this way, the optimum creditworthiness is searched for. In such a case, the degrees of association illustrated in Fig. 4 (Table 1) acquired in advance is referred to. For example, in the case where the acquired new account settlement information is the same as or similar to P02 and the management plan information is the same as or similar to P17, a node 61d is associated through the degrees of association, and this node 61d is associated with "substantially bankrupt" by w19 and with "to be careful" by the degree of association w20. In such a case, "substantially bankrupt" with the highest degree of association is selected as the optimum solution. However, it is not essential to select the one with the highest degree of association as the optimum solution, and "to be careful", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Further, Table 2 below provides examples of degrees of association w1 to w12 extending from the inputs.

**[Table 2]**

| Symbol | Degree of association |
|---|---|
| w1 | 8 |
| w2 | 1 |
| w3 | 7 |
| w4 | 6 |
| w5 | 5 |
| w6 | 9 |
| w7 | 3 |
| w8 | 9 |
| w9 | 2 |
| w10 | 4 |
| w11 | 10 |
| w12 | 2 |

An intermediate node 61 may be selected based on such degrees of association w1 to w12 extending from the inputs. In other words, a higher one of the degrees of association w1 to w12 may be given a higher weight to select the intermediate node 61. However, the degrees of association w1 to w12 may all have the same value, and the weights to select the intermediate node 61 may all be the same.

Fig. 5 illustrates an example in which combinations of the above-mentioned reference account settlement information and reference market potential information, and three or more levels of degrees of association between the combinations and the creditworthiness are set.

The reference market potential information is any data about the potential of the market in which the corresponding company intends to provide products or services. This reference market potential information includes various data based on blogs, analyst reports, securities reports, advertisements, press releases, news articles, etc. in the corresponding market. For the reference market potential information, the market potential itself may be categorized. Specifically, reference market potential information P18 to P21 in Fig. 5 may be information classified by type, and may be classified by an analyst performing separation based on whether or not the market growth rate is a specific percentage or more per year, for example. Further, it may be categorized by a pattern (e.g., a pattern indicating that the market growth rate increases rapidly or gradually), for example.

In the example of Fig. 5, it is assumed that, as input data, the reference account settlement information P01 to P03 and the reference market potential information P18 to 21 are used, for example. As such input data, intermediate nodes illustrated in Fig. 5 are combinations of the reference market potential information and the reference account settlement information. Each intermediate node is further linked to outputs. For each output, creditworthiness as an output solution is represented.

The combinations (intermediate node) of the reference account settlement information and the reference market potential information are associated with each other through three or more levels of degrees of association for creditworthiness, as the output solutions. The reference account settlement information and the reference market potential information are arranged on the left side with respect to the degrees of association, and each creditworthiness is arranged on the right side with respect to the degrees of association. The degree of association indicates which of the creditworthiness has high association with the reference account settlement information and the reference market potential information, which are arranged on the left side. In other words, this degree of association is an index indicating what creditworthiness is likely to be associated with each piece of reference account settlement information and reference market potential information, and also indicates the accuracy in selecting the most probable creditworthiness from the reference account settlement information and the reference market potential information. The possibility of collecting funds will change depending on the actual market potential, in addition to the account settlement information. Therefore, the optimum creditworthiness will be searched for based on the combinations of the reference account settlement information and the reference market potential information.

In the example of Fig. 5, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 5. Specifically, in assessing the actual search solution, the search apparatus 2 accumulates the past data on the reference account settlement information and the reference market potential information, and which of the creditworthiness was suitable for these pieces of information, analyzes and examines them, and thus makes the degrees of association illustrated in Fig. 5 in advance.

The analyzing and examining may be performed by artificial intelligence. In such a case, for example, for the reference account settlement information P01 and the reference market potential information P20, analysis is performed on the creditworthiness from the past data. For example, in an example of intermediate node 61a, it is linked to the outputs of "possibly bankrupt" and "normal", and specifically, based on the previous cases, the degree of association of w13 that leads to "possibly bankrupt" is set to 7 points; the degree of association of w14 that leads to "normal" is set to 2 points.

Further, the degrees of association illustrated in Fig. 5 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 5, a node 61b is a node in which the reference market potential information P18 is combined with the reference account settlement information P01 and for which the degree of association for "substantially bankrupt" is w15 and the degree of association for "to be managed" is w16. A node 61c is a node in which the reference market potential information P19 and P21 are combined with the reference account settlement information P02 and for which the degree of association for "normal" is w17 and the degree of association for "to be careful" is w18.

Such degrees of association are what is called learned data in artificial intelligence. After such learned data is created, when an advice is actually provided from now on, the above learned data will be used. In such a case, in addition to the above-mentioned account settlement information, market potential information about the potential of the market in which the borrower company for which the creditworthiness is to be newly determined develops business is acquired. The market potential information corresponds to the reference market potential information, and an analyst report or a securities report may be directly imported therein. If there is any other statistical data, that data may be directly imported.

Based on the new account settlement information and market potential information acquired in this way, the creditworthiness is searched for. In such a case, the degrees of association illustrated in Fig. 5 (Table 1) acquired in advance is referred to. For example, in the case where the acquired new account settlement information is the same as or similar to P02 and the market potential information is P21, a node 61d is associated through the degrees of association, and this node 61d is associated with "substantially bankrupt" by w19 and with "to be careful" by the degree of association w20. In such a case, "substantially bankrupt" with the highest degree of association is selected as the optimum solution. However, it is not essential to select the one with the highest degree of association as the optimum solution, and "to be careful", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 6 illustrates an example in which combinations of the above-mentioned reference account settlement information and reference intellectual asset information, and three or more levels of degrees of association between the combinations and the creditworthiness are set.

The reference intellectual asset information is information on intellectual assets owned by the company, and mainly includes information such as patent rights, utility model rights, design rights, trademark rights, and copyrights. For the reference intellectual asset information, in addition to these, the reference intellectual asset information includes all kinds of intellectual assets such as patents pending, designs pending, trademarks pending, know-how accumulated in the company, sales information, customer information, and knowledge about manufacturing processes, and the intellectual asset itself may be categorized. Specifically, reference intellectual asset information P22 to P25 in Fig. 6 may be information classified by type, and may be classified by the number of patents, for example. Further, it may be categorized by a pattern (a pattern such as ratios of patent, design, and trademark), for example.

In the example of Fig. 6, it is assumed that, as input data, the reference account settlement information P01 to P03 and the reference intellectual asset information P22 to 25 are used, for example. As such input data, intermediate nodes illustrated in Fig. 6 are combinations of the reference intellectual asset information and the reference account settlement information. Each intermediate node is further linked to outputs. For each output, creditworthiness as an output solution is represented.

The combinations (intermediate node) of the reference account settlement information and the reference intellectual asset information are associated with each other through three or more levels of degrees of association for creditworthiness, as the output solutions. The reference account settlement information and the reference intellectual asset information are arranged on the left side with respect to the degrees of association, and each creditworthiness is arranged on the right side with respect to the degrees of association. The degree of association indicates which of the creditworthiness has high association with the reference account settlement information and the reference intellectual asset information, which are arranged on the left side. In other words, this degree of association is an index indicating what creditworthiness is likely to be associated with each piece of reference account settlement information and reference intellectual asset information, and also indicates the accuracy in selecting the most probable creditworthiness from the reference account settlement information and the reference intellectual asset information. The possibility of collecting funds will change depending on the actual intellectual assets, in addition to the account settlement information. Therefore, the optimum creditworthiness will be searched for based on the combinations of the reference account settlement information and the reference intellectual asset information.

In the example of Fig. 6, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 6. Specifically, in assessing the actual search solution, the search apparatus 2 accumulates the past data on the reference account settlement information and the reference intellectual asset information, and which of the creditworthiness was suitable for these pieces of information, analyzes and examines them, and thus makes the degrees of association illustrated in Fig. 5 in advance.

The analyzing and examining may be performed by artificial intelligence. In such a case, for example, for the reference account settlement information P01 and the reference intellectual asset information P24, analysis is performed on the creditworthiness from the past data. For example, in an example of intermediate node 61a, it is linked to the outputs of "possibly bankrupt" and "normal", and specifically, based on the previous cases, the degree of association of w13 that leads to "possibly bankrupt" is set to 7 points; the degree of association of w14 that leads to "normal" is set to 2 points.

Further, the degrees of association illustrated in Fig. 6 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 6, a node 61b is a node in which the reference intellectual asset information P22 is combined with the reference account settlement information P01 and for which the degree of association for "substantially bankrupt" is w15 and the degree of association for "to be managed" is w16. A node 61c is a node in which the reference intellectual asset information P23 and P25 are combined with the reference account settlement information P02 and for which the degree of association for "normal" is w17 and the degree of association for "to be careful" is w18.

Such degrees of association are what is called learned data in artificial intelligence. After such learned data is created, when an advice is actually provided from now on, the above learned data will be used. In such a case, in addition to the above-mentioned account settlement information, intellectual asset information about intellectual assets owned by the borrower company for which the creditworthiness is to be determined is acquired. The intellectual asset information corresponds to the reference intellectual asset information, and is information such as patent rights owned, and these may be directly imported. If there is any other statistical data, that data may be directly imported.

Based on the new account settlement information and intellectual asset information acquired in this way, the creditworthiness is searched for. In such a case, the degrees of association illustrated in Fig. 6 (Table 1) acquired in advance is referred to. For example, in the case where the acquired new account settlement information is the same as or similar to P02 and the intellectual asset information is P21, a node 61d is associated through the degrees of association, and this node 61d is associated with "substantially bankrupt" by w19 and with "to be careful" by the degree of association w20. In such a case, "substantially bankrupt" with the highest degree of association is selected as the optimum solution. However, it is not essential to select the one with the highest degree of association as the optimum solution, and "to be careful", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 7 illustrates an example in which combinations of the above-mentioned reference account settlement information and reference market condition information, and three or more levels of degrees of association between the combinations and the creditworthiness are set.

The reference market condition information is various information about market conditions. The market conditions referred to here may be for a target in any range including one company, the entire industry including that company, Japan as a whole, and the world as a whole. Examples of this reference market condition information include price movements of interest rates, foreign exchange, share prices of stocks, crude oil, futures, precious metals, Bitcoin, and the like. This reference market condition information may be displayed as a time-series chart, a line graph, or the like for these targets. Further, information such as Bollinger band, MACD, and moving average line may be appended. In addition, this market condition information may include fundamental indicators of the company of each stock, and may also include indicators such as PER (price earnings ratio), PBR (price-to-book value ratio), and ROE (return on equity) as well as annual sales, profits, and costs. For foreign exchange, information such as a chart illustrating price movements between currencies, Bollinger Bands, MACDs, and moving average lines may be appended. For the reference market condition information, the market potential itself may be categorized. Specifically, reference market condition information P26 to P29 in Fig. 7 may be information classified by type, and may be classified by separation based on whether or not the stock growth rate is a specific percentage or more per year, for example. Further, it may be categorized by a pattern (e.g., a pattern indicating that the stock growth rate increases rapidly or gradually), for example.

In the example of Fig. 7, it is assumed that, as input data, the reference account settlement information P01 to P03 and the reference market condition information P26 to 29 are used, for example. As such input data, intermediate nodes illustrated in Fig. 7 are combinations of the reference market condition information and the reference account settlement information. Each intermediate node is further linked to outputs. For each output, creditworthiness as an output solution is represented.

The combinations (intermediate node) of the reference account settlement information and the reference market condition information are associated with each other through three or more levels of degrees of association for creditworthiness, as the output solutions. The reference account settlement information and the reference market condition information are arranged on the left side with respect to the degrees of association, and each creditworthiness is arranged on the right side with respect to the degrees of association. The degree of association indicates which of the creditworthiness has high association with the reference account settlement information and the reference market condition information, which are arranged on the left side. In other words, this degree of association is an index indicating what creditworthiness is likely to be associated with each piece of reference account settlement information and reference market condition information, and also indicates the accuracy in selecting the most probable creditworthiness from the reference account settlement information and the reference market condition information. The possibility of collecting funds will change depending on the actual market conditions, in addition to the account settlement information. Therefore, the optimum creditworthiness will be searched for based on the combinations of the reference account settlement information and the reference market condition information.

In the example of Fig. 5, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 5. Specifically, in assessing the actual search solution, the search apparatus 2 accumulates the past data on the reference account settlement information and the reference market condition information, and which of the creditworthiness was suitable for these pieces of information, analyzes and examines them, and thus makes the degrees of association illustrated in Fig. 5 in advance.

The analyzing and examining may be performed by artificial intelligence. In such a case, for example, for the reference account settlement information P01 and the reference market condition information P28, analysis is performed on the creditworthiness from the past data. For example, in an example of intermediate node 61a, it is linked to the outputs of "possibly bankrupt" and "normal", and specifically, based on the previous cases, the degree of association of w13 that leads to "possibly bankrupt" is set to 7 points; the degree of association of w14 that leads to "normal" is set to 2 points.

Further, the degrees of association illustrated in Fig. 7 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 5, a node 61b is a node in which the reference market condition information P26 is combined with the reference account settlement information P01 and for which the degree of association for "substantially bankrupt" is w15 and the degree of association for "to be managed" is w16. A node 61c is a node in which the reference market condition information P27 and P29 are combined with the reference account settlement information P02 and for which the degree of association for "normal" is w17 and the degree of association for "to be careful" is w18.

Such degrees of association are what is called learned data in artificial intelligence. After such learned data is created, when an advice is actually provided from now on, the above learned data will be used. In such a case, in addition to the above-mentioned account settlement information, the conditions of the market in which the borrower company for which the creditworthiness is to be newly determined develops business, and market condition information that reflects the market conditions of Japan as a whole and the world as a whole are acquired. The market condition information corresponds to the reference market potential information, and chart information of stock prices and foreign exchanges may be directly imported. If there is any other statistical data, that data may be directly imported.

Based on the new account settlement information and market condition information acquired in this way, the creditworthiness is searched for. In such a case, the degrees of association illustrated in Fig. 7 (Table 1) acquired in advance is referred to. For example, in the case where the acquired new account settlement information is the same as or similar to P02 and the market condition information is P29, a node 61d is associated through the degrees of association, and this node 61d is associated with "substantially bankrupt" by w19 and with "to be careful" by the degree of association w20. In such a case, "substantially bankrupt" with the highest degree of association is selected as the optimum solution. However, it is not essential to select the one with the highest degree of association as the optimum solution, and "to be careful", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 8 illustrates an example in which combinations of the above-mentioned reference account settlement information and reference external environment information, and three or more levels of degrees of association between the combinations and the creditworthiness are set.

The reference external environment information is various information about external environment information. The external environment information referred to here typically includes economic data (GDP, employment statistics, mining and industry production index, capital investment, labor force survey, etc.), household data (household consumption survey, household data, average working hours per week, savings amount statistical data, annual income statistical data, etc.), real estate data (office vacancy rate, unit price per tsubo, rent market price, land price, vacant house data, etc.), and natural environment data (disaster data, temperature data, precipitation data, wind direction data, humidity data, etc.). In addition to the information that reflects a part or all of such data, the external environment information includes all information outside the company to be examined. For the reference external environment information, the external environment itself may be categorized. Specifically, reference market condition information P30 to P33 in Fig. 8 may be information classified by type, and may be classified by separation based on data in the employment statistics, for example. Further, it may be categorized by a pattern (e.g., a pattern indicating that the GDP growth rate increases rapidly or gradually), for example.

In the example of Fig. 8, it is assumed that, as input data, the reference account settlement information P01 to P03 and the reference external environment information P30 to 33 are used, for example. As such input data, intermediate nodes illustrated in Fig. 8 are combinations of the reference external environment information and the reference account settlement information. Each intermediate node is further linked to outputs. For each output, creditworthiness as an output solution is represented.

The combinations (intermediate node) of the reference account settlement information and the reference external environment information are associated with each other through three or more levels of degrees of association for creditworthiness, as the output solutions. The reference account settlement information and the reference external environment information are arranged on the left side with respect to the degrees of association, and each creditworthiness is arranged on the right side with respect to the degrees of association. The degree of association indicates which of the creditworthiness has high association with the reference account settlement information and the reference external environment information, which are arranged on the left side. In other words, this degree of association is an index indicating what creditworthiness is likely to be associated with each piece of reference account settlement information and reference external environment information, and also indicates the accuracy in selecting the most probable creditworthiness from the reference account settlement information and the reference external environment information. The possibility of collecting funds will change depending on the actual external environment, in addition to the account settlement information. Therefore, the optimum creditworthiness will be searched for based on the combinations of the reference account settlement information and the reference external environment information.

In the example of Fig. 5, w13 to w22 are illustrated as the degrees of association. These w13 to w22 are represented in 10 levels as listed in Table 1 in which the closer to 10 points, the higher the degree of association between the corresponding combination as an intermediate node and the corresponding output; on the contrary, the closer to 1 point, the lower the degree of association between the corresponding combination as an intermediate node and the corresponding output.

The search apparatus 2 acquires in advance such degrees of association w13 to w22 in three or more levels illustrated in Fig. 5. Specifically, in assessing the actual search solution, the search apparatus 2 accumulates the past data on the reference account settlement information and the reference external environment information, and which of the creditworthiness was suitable for these pieces of information, analyzes and examines them, and thus makes the degrees of association illustrated in Fig. 5 in advance.

The analyzing and examining may be performed by artificial intelligence. In such a case, for example, for the reference account settlement information P01 and the reference external environment information P28, analysis is performed on the creditworthiness from the past data. For example, in an example of intermediate node 61a, it is linked to the outputs of "possibly bankrupt" and "normal", and specifically, based on the previous cases, the degree of association of w13 that leads to "possibly bankrupt" is set to 7 points; the degree of association of w14 that leads to "normal" is set to 2 points.

Further, the degrees of association illustrated in Fig. 8 may be those between nodes of an artificial intelligence-based neural network. Specifically, the weighting coefficients for the outputs of the nodes of this neural network corresponds to the above-mentioned degrees of association. Further, the network is not limited to the neural network, and may be of all decision-making factors constituting artificial intelligence.

In the example of the degrees of association illustrated in Fig. 8, a node 61b is a node in which the reference external environment information P30 is combined with the reference account settlement information P01 and for which the degree of association for "substantially bankrupt" is w15 and the degree of association for "to be managed" is w16. A node 61c is a node in which the reference external environment information P31 and P33 are combined with the reference account settlement information P02 and for which the degree of association for "normal" is w17 and the degree of association for "to be careful" is w18.

Such degrees of association are what is called learned data in artificial intelligence. After such learned data is created, when an advice is actually provided from now on, the above learned data will be used. In such a case, in addition to the above-mentioned account settlement information, external environment information about outside of the borrower company for which the creditworthiness is to be newly determined is acquired. The external environment information corresponds to the reference market external environment information, and such data may be directly imported. If there is any other statistical data, that data may be directly imported.

Based on the new account settlement information and external environment information acquired in this way, the creditworthiness is searched for. In such a case, the degrees of association illustrated in Fig. 8 (Table 1) acquired in advance is referred to. For example, in the case where the acquired new account settlement information is the same as or similar to P02 and the external environment information is P33, a node 61d is associated through the degrees of association, and this node 61d is associated with "substantially bankrupt" by w19 and with "to be careful" by the degree of association w20. In such a case, "substantially bankrupt" with the highest degree of association is selected as the optimum solution. However, it is not essential to select the one with the highest degree of association as the optimum solution, and "to be careful", which has the lower degree of association but whose association is recognized, may be selected as the optimum solution. Instead of this, it goes without saying that an output solution to which no arrow is connected may be selected, and any other output solution may be selected in any other priority as long as it is based on any degree of association.

Fig. 9 illustrates an example in which combinations of the above-mentioned reference account settlement information, the reference management plan information, and also the reference market potential information, and three or more levels of degrees of association between the combinations and the creditworthiness are set.

In such a case, as illustrated in Fig. 9, the degrees of association are expressed for a set of combinations of the reference account settlement information, the reference management plan information, and the reference market potential information so that the combinations correspond to nodes 61a to 61e being intermediate nodes as in the case described above.

For example, in Fig. 9, the node 61c is associated with the reference account settlement information P02 by the degree of association w3, with the reference management plan information P15 by the degree of association w7, and with reference market potential information P19 by the degree of association w11. Similarly, the node 61e is associated with the reference account settlement information P03 by the degree of association w5, with the reference management plan information P15 by the degree of association w8, and with reference market potential information P18 by the degree of association w10.

Similarly in the case where such degrees of association are set, the search solutions are accessed based on the acquired new account settlement information, management plan information, and management plan information.

In assessing the search solutions, the degrees of association illustrated in Fig. 9 acquired in advance are referred to. For example, in the case where the acquired account settlement information is the same as or similar to the reference account settlement information P02, the acquired management plan information corresponds to the reference management plan information P15, and further the acquired management plan information corresponds to the reference management plan information P19, the combination of them is associated with the node 61c, and this node 61c is associated with "normal" by the degree of association w17 and with "to be careful" by the degree of association w18. As a result of such degrees of association, a search solution will actually be obtained based on w17 and w18.

For a combination of three or more types of such input parameters, two or more of the reference management plan information, the reference management plan information, the reference intellectual asset information, the reference market condition information, and the reference external environment information may be used for the combination in addition to the reference account settlement information.

Further, as illustrated in Fig. 10, reference information U is composed of reference management plan information, reference intellectual asset information, reference market condition information, and reference external environment information, and the like, as well as reference account settlement information, reference information V includes reference management plan information, reference intellectual asset information, reference market condition information, and reference external environment information, as well as the reference account settlement information with which the reference information U is combined to make degrees of association, and the assessment may be made based on degrees of association between combinations of these pieces of information. The resulting output solution corresponds to any of the creditworthiness described above.

In this case, an output obtained for the reference information U may be used as input data as it is, and may be associated with an output through the intermediate node 61 at which the reference information U is combined with the reference information V. For example, for the reference information U, an output solution is output, and may then be used as an input as it is to use the degrees of association between the reference information U and other reference information V and to search for an output.

In the above-mentioned degrees of association, each degree of association is expressed by a 10-level evaluation, but it is not limited to this as long as it is expressed by a three or more levels of degree of association, and in other words, it may be 100 levels or 1000 levels as long as it is three or more levels. On the other hand, this degree of association does not include those expressed in two levels, that is, whether or not they are related to each other, either 1 or 0.

According to the present invention having the above-described configuration, anyone can easily search for the creditworthiness of a company for which it is considered for loan, without any special skill or experience. Further, according to the present invention, it is possible to determine the search solution with higher accuracy than when performed by a human. Further, configuring the above-mentioned degrees of association by artificial intelligence (neural network or the like) and then learning them makes it possible to further improve the determination/assessment accuracy.

Note that, since the above-mentioned input data and output data are often not exactly the same in the process of learning, the input data and the output data may be classified by type. Specifically, the information P01, P02, ..., P15, 16, ..., which make up input data may be classified according to the criteria classified in advance on the system side or the user side depending on the content of the information, and a data set of the classified input data and output data may be created and used for learning.

Further, the present invention has a feature that the optimum solution is searched for through the degrees of association set in three or more levels. The degree of association can be described by, for example, a numerical value from 0 to 100% instead of the above-mentioned 10 levels, but the degree of association is not limited to this, and any level can be used as long as it can be described by a numerical value of three or more levels.

By determining the creditworthiness with higher credibility and less misunderstanding based on the degree of association expressed by a numerical value of three or more levels, in the situation where there are multiple possible candidates for the search solution, the candidates can be searched and displayed in descending order of their degrees of association.

In addition to this, according to the present invention, it is possible to perform determination without overlooking even a determination/assessment result of output having an extremely low degree of association such as 1%. It is possible to cause the user to pay attention that even a determination/assessment result with an extremely low degree of association is involved as a slight sign and may be useful as the determination/assessment result once every tens or hundreds of times.

Further, the present invention has an advantage that the search policy can be determined depending on how to set a threshold value by performing the search based on such degrees of association of three or more levels. If the threshold value is lowered, a determination/assessment result even with the above-mentioned degree of association being 1% can be picked up without omission, whereas there is a low possibility to detect a more appropriate determination/assessment result suitably, and a lot of noise may be picked up. On the other hand, if the threshold value is raised, there is a high possibility to detect the optimum search solution with high probability, whereas typical degrees of association are as low as they are not required to be taken into consideration but a suitable solution that appears at least once every tens or hundreds of times may be overlooked. It is possible to decide which one of the threshold settings to prioritize based on the ideas of the user side and the system side, but it is possible to increase the degree of freedom in selecting such a point to prioritize.

Further, in the present invention, the above-mentioned degrees of association may be updated. This update may reflect information provided via a public communication network such as the Internet. When knowledge, information, and data such as event information, external environment information, household information, real estate information, expert opinion information, and natural environment information are acquired in addition to the market condition information, the corresponding degree of association is increased or decreased according to these pieces of information.

In other words, this update corresponds to learning in the sense of artificial intelligence. Since new data is acquired and it is reflected in the learned data, this is just a learning act.

Further, this update of the degrees of association may be not based on the information available from the public communication network, and may be artificial or automatic update performed by the system side or the user side based on the contents of expert research data and papers, conference presentations, newspaper articles, books, and the like. Artificial intelligence may be utilized in such update processing.

Further, the process of first creating the learned model and the above-mentioned update may use not only supervised learning but also unsupervised learning, deep learning, reinforcement learning, and the like. In the case of unsupervised learning, instead of reading and learning a data set of input data and output data, information corresponding to the input data may be read and learned to make the degrees of association related to the output data by itself from the resulting information.

### [Reference Signs List]

- 1: Borrower creditworthiness determination system
- 2: Search apparatus
- 21: Internal bus
- 23: Display unit
- 24: Control unit
- 25: Operation unit
- 26: Communication unit
- 27: Estimation unit
- 28: Storage unit
- 61: Node

## Claims

1. A borrower creditworthiness determination program for determining creditworthiness of a borrower company, the borrower creditworthiness determination program causing a computer to execute:
an information acquisition step of acquiring latest account settlement information of a borrower company for which creditworthiness is to be newly determined and market potential information about a potential of a market in which the borrower company for which creditworthiness is to be newly determined develops business; and
a determination step of using a degree of association between a combination of reference account settlement information including past account settlement reports acquired in advance and reference market potential information about a potential of the market in which the company for which the reference account settlement information has been acquired has developed business and creditworthiness determined based on the past account settlement reports, the degree of association being represented in three or more levels, so as to determine the creditworthiness of the borrower company based on the degree of association between the combination of the reference account settlement information corresponding to the account settlement information acquired at the information acquisition step and the reference market potential information corresponding to the market potential information acquired at the information acquisition step and the creditworthiness, the degree of association being represented in three or more levels.

2. A borrower creditworthiness determination program for determining creditworthiness of a borrower company, the borrower creditworthiness determination program causing a computer to execute:
an information acquisition step of acquiring latest account settlement information of a borrower company for which creditworthiness is to be newly determined and market condition information about a market condition in a period of time when the creditworthiness is to be newly determined; and
a determination step of using a degree of association between a combination of reference account settlement information including past account settlement reports acquired in advance and reference market condition information about a market condition in a period of time reflected on the reference account settlement information and creditworthiness determined based on the past account settlement reports, the degree of association being represented in three or more levels, so as to determine the creditworthiness of the borrower company based on the degree of association between the combination of the reference account settlement information corresponding to the account settlement information acquired at the information acquisition step and the reference market condition information corresponding to the market condition information acquired at the information acquisition step and the creditworthiness, the degree of association being represented in three or more levels.

3. A borrower creditworthiness determination program for determining creditworthiness of a borrower company, the borrower creditworthiness determination program causing a computer to execute:
an information acquisition step of acquiring latest account settlement information of a borrower company for which creditworthiness is to be newly determined and external environment information about external environment in a period of time when the creditworthiness is to be newly determined; and
a determination step of using a degree of association between a combination of reference account settlement information including past account settlement reports acquired in advance and reference external environment information about external environment in a period of time reflected on the reference account settlement information and creditworthiness determined based on the past account settlement reports, the degree of association being represented in three or more levels, so as to determine the creditworthiness of the borrower company based on the degree of association between the combination of the reference account settlement information corresponding to the account settlement information acquired at the information acquisition step and the reference external environment information corresponding to the external environment information acquired at the information acquisition step and the creditworthiness, the degree of association being represented in three or more levels.

4. The borrower creditworthiness determination program according to any one of claims 1 to 3, wherein the determination step includes using the degree of association corresponding to a weighting coefficient for each output of nodes of an artificial intelligence-based neural network.

5. A borrower creditworthiness determination system that determines creditworthiness of a borrower company, the borrower creditworthiness determination system comprising:
an information acquisition unit that acquires latest account settlement information of a borrower company for which creditworthiness is to be newly determined and market potential information about a potential of a market in which the borrower company for which creditworthiness is to be newly determined develops business; and
a determination unit that uses a degree of association between a combination of reference account settlement information including past account settlement reports acquired in advance and reference market potential information about a potential of the market in which the company for which the reference account settlement information has been acquired has developed business and creditworthiness determined based on the past account settlement reports, the degree of association being represented in three or more levels, so as to determine the creditworthiness of the borrower company based on the degree of association between the combination of the reference account settlement information corresponding to the account settlement information acquired by the information acquisition unit and the reference market potential information corresponding to the market potential information acquired by the information acquisition unit and the creditworthiness, the degree of association being represented in three or more levels.

6. A borrower creditworthiness determination system that determines creditworthiness of a borrower company, the borrower creditworthiness determination system comprising:
an information acquisition unit that acquires latest account settlement information of a borrower company for which creditworthiness is to be newly determined and market condition information about a market condition in a period of time when the creditworthiness is to be newly determined; and
a determination unit that uses a degree of association between a combination of reference account settlement information including past account settlement reports acquired in advance and reference market condition information about a market condition in a period of time reflected on the reference account settlement information and creditworthiness determined based on the past account settlement reports, the degree of association being represented in three or more levels, so as to determine the creditworthiness of the borrower company based on the degree of association between the combination of the reference account settlement information corresponding to the account settlement information acquired by the information acquisition unit and the reference market condition information corresponding to the market condition information acquired by the information acquisition unit and the creditworthiness, the degree of association being represented in three or more levels.

7. A borrower creditworthiness determination system that determines creditworthiness of a borrower company, the borrower creditworthiness determination system comprising:
an information acquisition unit that acquires latest account settlement information of a borrower company for which creditworthiness is to be newly determined and external environment information about external environment in a period of time when the creditworthiness is to be newly determined; and
a determination unit that uses a degree of association between a combination of reference account settlement information including past account settlement reports acquired in advance and reference external environment information about external environment in a period of time reflected on the reference account settlement information and creditworthiness determined based on the past account settlement reports, the degree of association being represented in three or more levels, so as to determine the creditworthiness of the borrower company based on the degree of association between the combination of the reference account settlement information corresponding to the account settlement information acquired by the information acquisition unit and the reference external environment information corresponding to the external environment information acquired by the information acquisition unit and the creditworthiness, the degree of association being represented in three or more levels.
